# EUROPEAN PATENT SPECIFICATION

(11) **EP 3 048 161 B1**
(45) Date of publication and mention of the grant of the patent: **08.08.2018**
(21) Application number: 15380001.6
(22) Date of filing: 20.01.2015
(51) Int. Cl.: C10L 9/08, F28F 21/04, F27B 9/24

(54) **INDUSTRIAL PLANT FOR BIOMASS THERMOCHEMICAL TREATMENT**
INDUSTRIEANLAGE ZUR THERMOCHEMISCHEN BIOMASSEBEHANDLUNG
INSTALLATION INDUSTRIELLE DE TRAITEMENT THERMOCHIMIQUE DE BIOMASSE

(43) Date of publication of application: 27.07.2016
(73) Proprietor: Energies Tèrmiques Bàsiques, SL, 08022 Barcelona (ES)
(72) Inventor: Alier Uriach, Santiago, 08022 Barcelona (Barcelona) (ES)
(74) Representative: Juncosa Miró, Jaime

(56) References cited:
- EP-A2- 2 653 523
- FR-A1- 2 888 724
- US-A1- 2008 202 983
- US-A1- 2011 179 713

## Description

### Field of the Art

The present invention relates to the field of industrial plants for the thermochemical treatment of biomass provided for working continuously. The treatment includes torrefaction, pyrolysis and/or gasification of the biomass to be treated for obtaining higher-value products, particularly biofuels.

The thermochemical treatment proposed in this document will preferably be performed under anoxic conditions, consisting therefore of applying heat to said biomass in a leak-tight, oxygen-free chamber, causing a thermochemical torrefaction, pyrolysis and/or gasification reaction of said biomass. The plant of this invention will also operate under almost anoxic conditions with very low oxygen content.

### State of the Art

The method for the thermochemical treatment of biomass under anoxic conditions causing torrefaction, pyrolysis or gasification of said biomass is known, but there are many plants designed for such purpose.

The plant described in document ES2321341T which proposes a closed treatment enclosure equipped with a helical transfer and heating screw is known, for example. In this case, the material of the spirals of the conveyor or screw is an electrically conductive material, heat being generated due to the passage of electricity therethrough by the Joule effect until reaching a temperature of between 170°C to 180°C, which alone is not enough to cause pyrolysis or gasification. A coating is provided for protecting the heating faces of the ceramic screw conveyor. The enclosure of the treatment chamber is equipped with a sensor which allows measuring the temperature of said walls. Temperature and rotation speed controls of the heating screw conveyor and injection of steam into the chamber at a certain pressure have been contemplated.

Patent document WO2011009074 also describes a plant for performing said biomass valorization, in which the reactor includes a vacuum chamber equipped with a screw conveyor, causing pyrolysis, torrefaction or gasification at temperatures of between 126°C and 250°C (very low temperatures achieved under vacuum conditions). This document describes that the vacuum chamber can be heated from the outside using several techniques, for example, using electric heaters.

In this case, it is impossible to work continuously since the vacuum chamber must have leak-tight gates to maintain the vacuum. Furthermore, the low working temperature allows being able to reach said temperature by means of electric heaters arranged outside the chamber, but without additional development they would not allow reaching high temperatures of up to 800°C inside the chamber, or the power consumption necessary to do so would make plant operation economically unfeasible.

Furthermore, patent document ES2461895 describes a plant of this type. In this case, pyrolysis is achieved in a reactor integrating a screw conveyor heated by electrical resistances surrounding the outer wall thereof. It optionally mentions the use of an external thermal insulation instead of electrical resistances in larger reactors in which heat is obtained from biomass combustion itself.

Additionally, patent document US20140013657 is known, which describes a plant for causing torrefaction, gasification or pyrolysis under reduced oxygen conditions. One embodiment describes a thermochemical reaction chamber around 2.5 cm in diameter and 25 cm in length, surrounded by a cylindrical electrical heating block, said plant having limited capacity and not being able to replace an industrial plant.

Scaling said plant to achieve the size and industrial production capacity would mean that the volume of the chamber would increase much more than its outer surface, whereby the electrical heating block arranged around it would require adaptations beyond a change in size, so that the inside of the reaction chamber will reach temperatures sufficient for causing torrefaction, pyrolysis or gasification.

There are also patent documents describing a thermochemical reaction chamber equipped with a heated screw conveyor, such as patent documents US 2008/202983 A1 or EP 2 653 523 A2 or CN103113919. However, none of these documents contemplates an installation according to claim 1. The use of a ceramic enclosure arranged around the reaction chamber provides beneficial effects in terms of heat refraction and thermal inertia, achieving lower power consumption, lower operating cost and a higher reactor working temperature. A large number of the mentioned documents do not allow reaching temperatures greater than 250°C, so it would be impossible to cause pyrolysis or gasification with many types of biomass requiring higher temperatures for causing said thermochemical reactions. Prior drying or subsequent cooling of the biomass is not mentioned either.

Nor is there any known patent document disclosing use of infrared emitters for heating the thermochemical reaction chamber or simultaneous heating of said chamber from the outside and the inside.

### Brief Description of the Invention

The present invention relates to an industrial plant for the thermochemical treatment of biomass under anoxic or almost anoxic conditions (low or nil oxygen content in the internal atmosphere of the reactor) provided for working continuously by means of a regular biomass inlet for the entrance of biomass and a regular treated biomass outlet for the exit of treated solid, liquid and/or gas biomass fractions.

Said thermochemical treatment leads to biomass valorization (increase in value), converting one product into another product or other higher-value products compared with the original product, typically by converting biomass waste into solid, liquid or gas biofuels.

In this document, biomass is understood as any organic substance or substance with carbon in its composition, such as agricultural waste, straw, pruning products, forestry waste, sawmill waste such as chips or sawdust, waste from the food industry such as offal, fruit and vegetable peels, foodstuffs that are damaged or withdrawn from the market, sewage sludge, etc., although plastic-type products, including foams and tires, are also considered biomass because their composition is also rich in carbon and they are susceptible of being subjected to a thermochemical valorization process. Using any type of biomass or mixtures of biomass in the proposed industrial plant to obtain added value products is contemplated.

Thermochemical treatment under anoxic conditions proposed in this document and known *per se* consists of applying heat to said biomass in a leak-tight chamber with a very low oxygen content, causing a thermochemical torrefaction, pyrolysis and/or gasification reaction with respect to said biomass. As a result of said thermochemical treatment, a gas fraction, a liquid fraction and/or a solid fraction is obtained from said biomass once treated, which fractions can be mixed together and require subsequent fractioning operations for the separation thereof. One or several of the fractions obtained from said thermochemical treatment of the biomass have an economic value exceeding the value of the biomass used, thus valorizing said product.

The result of said treatment will preferably be a fuel gas and/or fuel liquid and/or solid fuel which can often be pelletized or used as fertilizer. Other products of commercial interest can be obtained by means of this process.

For developing said thermochemical treatment, the biomass to be treated will preferably be cut into pieces until obtaining a homogeneous granular material having a size less than 10 mm, and the temperature of said treatment will be comprised between 200° and 800°C, these figures being illustrative and non-limiting.

Therefore, the present invention relates to an industrial plant provided for working continuously in which said thermochemical treatment process is performed under anoxic or almost anoxic conditions, said plant being defined in claim 1. It is also envisaged that each external heating means is associated with an independent ceramic plate, which is part of a plurality of ceramic plates, and that said plurality of external heating means associated with a plurality of ceramic plates is arranged in different angular positions and/or in successive axial positions with respect to the mentioned cylindrical wall.

Therefore, according to the proposed invention the cylindrical wall of the thermochemical reaction chamber is surrounded by a plurality of ceramic plates, each associated with independently powered and controlled external heating means, and said plurality of ceramic plates are arranged in different angular positions so placed around the reaction chamber, or in successive axial positions so placed along the reaction chamber, or with a combined distribution around and along said reaction chamber simultaneously, forming an array of ceramic plates extending around and along the mentioned chamber.

It will be understood that the mentioned actuating means refer to any one of the following, or another equivalent, as will be obvious for a skilled person: electric motor, hydraulic motor, pneumatic motor, servomotor, etc. It will also be understood that said actuating means require an external power source and are electrically or electronically controlled, by means of a programmable logic controller, a computer, or another electronic device. The actuating means can include sensors providing information for correct electric or electronic control.

Likewise, it will be understood that in this document heating means refer to any one of the following, or another equivalent, as will be obvious for a skilled person: electrical resistance, infrared emitter, gas burners, microwave emitters, by means of magnetic induction, etc. It will also be understood that said heating means require an external power source and are electrically and electronically controlled, by means of a programmable logic controller, The heating means can include sensors providing information for correct electric or electronic control.

It is envisaged that said screw conveyor is fixed around the drive shaft, such that rotation of said drive shaft causes the rotation of the screw conveyor.

In addition to the features described up until now, the proposed plant can optionally include a plurality of electrically powered internal heating means, which are part of the plurality of heating means, said internal heating means comprising:
- a plurality of shaft heating means, each of them being independently powered and/or controlled with respect to the rest of the heating means, said shaft heating means being arranged completely inside the drive shaft of the screw conveyor or extending along said axis of rotation inscribed in the ends of said drive shaft; and/or
- a plurality of screw heating means, each of them being independently powered and/or controlled with respect to the rest of the heating means, said screw heating means being integrated on the spiral surface of the screw conveyor.

Said shaft heating means can be integrated inside the drive shaft such that they are fixed and independent of the rotation of the drive shaft or integral with said drive shaft and powered by means of a rotary joint. Alternatively, said shaft heating means could be located in a fixed rod concentric with said drive shaft regardless of the fact that said drive shaft extends along the entire length of the chamber or is formed only by two end support portions.

Preferably, the mentioned external heating means will be infrared radiators and/or said internal heating means will be electrical resistances.

Said infrared radiators are integrated inside said ceramic plates and electrically powered by means of conductors encased in an insulating material having high thermal resistance, for example, steatite.

Additionally and optionally, the proposed plant can further include:
- a cylindrical drying chamber equipped with other heating means for controllably heating said drying chamber to temperatures up to 300°C, and provided with a gas phase outlet for extracting moisture from inside the drying chamber, said drying chamber being provided for drying wet biomass by means of working continuously and for continuously feeding dry biomass into said thermochemical reaction chamber through its biomass inlet; and/or
- a cylindrical cooling chamber equipped with cooling means for controllably cooling in said cooling chamber the mentioned solid fraction continuously supplied from said at least one treated biomass outlet of the thermochemical reaction chamber to temperatures less than 40°C,
both chambers being equipped with a screw conveyor fitting their respective inner dimensions.

Said drying chamber treats the biomass before being supplied to the thermochemical reaction chamber, reducing its moisture which is extracted through a gas phase outlet. The biomass thereby enters the thermochemical reaction chamber with a reduced moisture level and preheated, improving the thermochemical reaction and preventing sudden temperature changes inside the thermochemical reaction chamber. This drying chamber makes it easier for the plant to work continuously, treating a constant supply of biomass.

Said cooling chamber treats the solid fraction of the treated biomass after it passes through the thermochemical reaction chamber and reduces its temperature through the cooling means which can be, by way of non-limiting example, a supply of air that is cooler than the material to be cooled which is circulated through the inside of the cooling chamber, or a cold fluid which is circulated through conduits thermally connected with the material to be cooled. Said conduits can be integrated in the cylindrical wall of the cooling chamber or inside the drive shaft of the screw conveyor, for example. The cooling chamber optionally allows discharging said solid fraction up to temperatures close to ambient temperature.

According to another preferred embodiment, each of said ceramic plates of the external heating means covers a surface that is less than 10% of the outer surface of the thermochemical reaction chamber. Furthermore, said external and/or shaft heating means are provided for being individually replaced without having to remove any other heating means, resulting in simpler, faster and more economical maintenance.

In another embodiment, subassemblies of ceramic plates, which are part of said plurality of ceramic plates, are integrated in common frames, each common frame provided for being removed from the plant along with the subassembly of ceramic plates integrated in said frame without having to remove any other frame from the plant. Therefore, groups of ceramic plates can be removed together for maintenance or replacement in a fast and economical manner.

All the preceding embodiments can also include the feature that all the ceramic plates are identical to one another, which means that the cost for construction and maintenance is reduced, and that the fastenings, supports and connections thereof can be standardized, being common in the entire plant.

Additionally, the proposed plant will have a plurality of sensors which allow acquiring data selected from a set comprising:
- temperature of the external heating means;
- temperature of the internal heating means;
- temperature inside the thermochemical reaction chamber at selected points thereof, comprising the cylindrical wall;
- power consumption of the external heating means;
- power consumption of the internal heating means;
- power consumption of the actuating means of the drive shaft;
- actuating speed of the screw conveyor;
- actuating speed of the inlet valve;
- actuating speed of the outlet valve;
- oxygen content of the thermochemical reaction chamber.

A programmable logic controller is preferably connected to said sensors and is also configured for regulating, based on the data supplied by said sensors, a plurality of automatic actuators selected from at least the following:
- automatically operated biomass inlet valve;
- automatically operated fraction outlet valve for the exit of gas, liquid and solid fractions;
- actuating means connected to said drive shaft;

Controlling the valves and actuating means allows regulating biomass content inside the thermochemical reaction chamber, as well as the speed at which it operates and the time the biomass remains inside said chamber. Furthermore, regulating said inlet and outlet valves also allows regulating the entrance of outside air, and therefore oxygen, into the thermochemical reaction chamber. For example, it has been detected in some rotary valve models that operating the valve in the direction opposite that recommended by the manufacturer allows reducing the entrance of air through said valve.

A skilled person will understand that the programmable logic controller is an electronic device equipped with a memory, data input, data output, calculating capacity and an interface for allowing a user to know its operation and/or to modify its configuration or programming.

Both the sensors and the programmable logic controller connected to the actuators allow automatically regulating and adapting the plant for optimization, since the composition of the biomass used and environmental determinants, such as temperature and moisture outside the plant, can vary and influence thermochemical reactions for valorizing biomass. Therefore, constant monitoring of relevant process variables allows knowing the state of said process at all times and detecting deviations to be corrected by means of automatic actuators controlled by the programmable logic controller.

They also allow being able to detect errors or malfunction of some systems of the plant and they allow the plant to be adjusted so as to allow it to continue operating correctly until the next scheduled maintenance shutdown, for example by increasing the temperature of some of the individual heating means to compensate for the failed operation of any other individual heating means.

According to an optional embodiment of the present invention, said plurality of internal heating means receive power supply from only one of the ends of the drive shaft, which simplifies construction and maintenance.

The first end or second end of the thermochemical reaction chamber is furthermore envisaged to have a practicable gate with a size sufficient for allowing complete extraction of the screw conveyor from inside the thermochemical reaction chamber. The inside of the thermochemical reaction chamber can thus be emptied and cleaned manually, if required, or it can allow replacing said screw conveyor for adapting it to different biomass types or compositions to be treated or for quick plant repair.

For some biomass compositions, it will be preferable to use a screw conveyor equipped with stirring blades arranged against the spiral surface of the conveyor stirring and shifting around the biomass conveyed by means of said screw conveyor, thus airing same and achieving greater heat exchange with the thermochemical reaction chamber, preventing said biomass from caking.

In reference to the ceramic plates, these are preferably arranged laterally contiguous to one another in the axial direction and/or in the radial direction of the thermochemical reaction chamber, contacting one another or with a gap therebetween equal to or less than 5 cm.

There will preferably be a gap of between 3 and 50 mm between the ceramic plates and the cylindrical wall of the thermochemical reaction chamber.

It will be understood that references to geometric position such as, for example parallel, perpendicular, tangent, etc., allow deviations of up to ±5° with respect to the theoretical position defined by said nomenclature.

Other features of the invention will be described in the following detailed description of an embodiment.

### Brief Description of the Drawings

The foregoing and other advantages and features will be better understood based on the following detailed description of an embodiment in reference to the attached drawings which however do not show the essential feature of the plurality of external heating means being arranged in different angular positions with respect to the cylindrical wall of the thermochemical reaction chamber, and which must be interpreted in an illustrative and non-limiting manner, in which:
Figure 1 is a schematic view of a valorization plant equipped with a drying chamber, a thermochemical reaction chamber and a cooling chamber connected in series, and furthermore having two cyclone filters and a condenser for separating the solid, liquid and gas fractions obtained from the thermochemical treatment of biomass;
Figure 2 shows a cross-section of the thermochemical reaction chamber;
Figure 3 shows a longitudinal section of the thermochemical reaction chamber.

### Detailed Description of an Embodiment

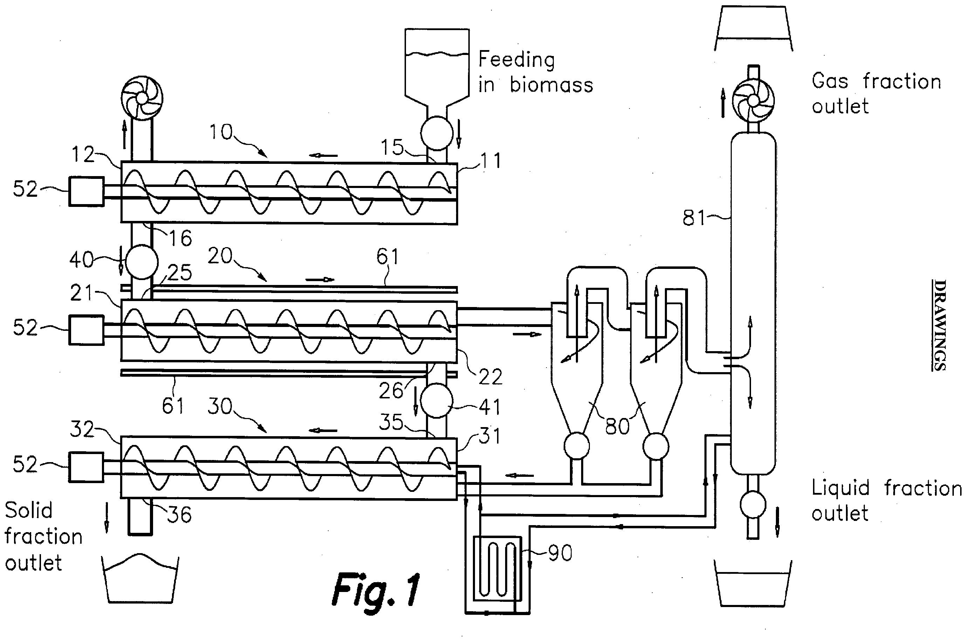

The objective of the industrial plant for the thermochemical treatment of biomass under anoxic or almost anoxic conditions schematically shown in Figure 1 and described below with an illustrative and non-limiting character is to convert biomass into another product or other products, obtaining solid, liquid and/or gas fractions of commercial interest and having an economic value greater than that of the biomass used for obtaining them.

Biomass is understood as any compound, either natural or originating from human activity, containing at least carbon. For informative purposes, examples of biomass include in a non-exclusive manner any type of aqueous and/or land forestry and/or agricultural waste, all solid urban waste and/or fractions thereof, all waste originating from fossil fuels (such as plastics, tires and mattress foams, for example), sewage sludge, etc.

The proposed valorization industrial plant increases the temperature of the biomass under anoxic or almost anoxic conditions to achieve one of the three possible thermochemical states of torrefaction, pyrolysis and gasification. These three states are achieved by means of different temperatures inside a thermochemical reaction chamber. The states having the lowest to the highest temperature are torrefaction (typically around 300°C), pyrolysis (typically between 300 and 600°C) and gasification (typically between 500 and 800°C) at ambient pressure. The required temperatures and the obtained products will depend on the composition of the biomass used, and on other environmental determinants, such as temperature and moisture, or the time during which the biomass is treated.

The plant shown in the attached drawings is adapted for working with biomass having a granular composition with fragments having an average size of between 1 and 10 mm, although the normal average size must be between 2 and 6 mm.

Therefore, the plant shown in Figure 1 consists of a thermochemical reaction chamber 20 preceded by a drying chamber 10 and followed by a cooling chamber 30. Each of said three chambers 10, 20, 30 has an elongated cylindrical shape defined by a cylindrical wall 13, 23, 33 and by a first closed end 11, 21, 31 and a second closed end 12, 22, 32 and contain a screw conveyor 50 attached to a drive shaft 51 such that it is arranged around same concentric with said chamber.

This construction allows arranging a biomass inlet 15, 25, 35 adjacent to the first end 11, 21, 31 and a biomass outlet 16, 26, 36 adjacent to the second end 12, 22, 32 (or vice versa), such that the biomass goes through the entire chamber, conveyed by the screw conveyor 50 from the inlet to the outlet of the chamber.

Therefore, as seen in Figure 1 granular biomass is introduced through the biomass inlet 15 of the drying chamber 10. Said drying chamber 10 has heating means which allow reaching moderate temperatures of up to 300°C, thereby extracting part of the moisture from the biomass inside said drying chamber 10. A gas fraction outlet 19 arranged in the cylindrical wall 13 of the drying chamber 10 allows extracting moisture-loaded air from inside the drying chamber 10.

After going through the entire length of said drying chamber 10, the preheated dry biomass is extracted from said drying chamber 10 through a biomass outlet 16, which is in turn connected to the biomass inlet 25 of the thermochemical reaction chamber 20, which has heating means 60 that allow increasing the temperature of said chamber up to the 1200°C, for example, although it will usually operate at temperatures less than 800°C.

To improve plant efficiency, at least the thermochemical reaction chamber 20 and ideally also the drying chamber 20 will be surrounded by a layer of insulating material 24 minimizing energy losses of the system.

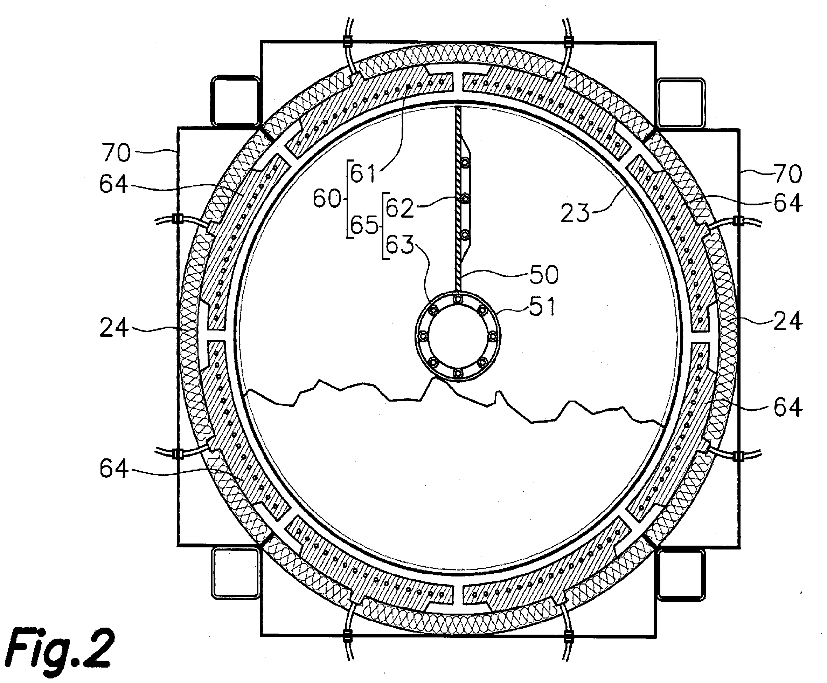

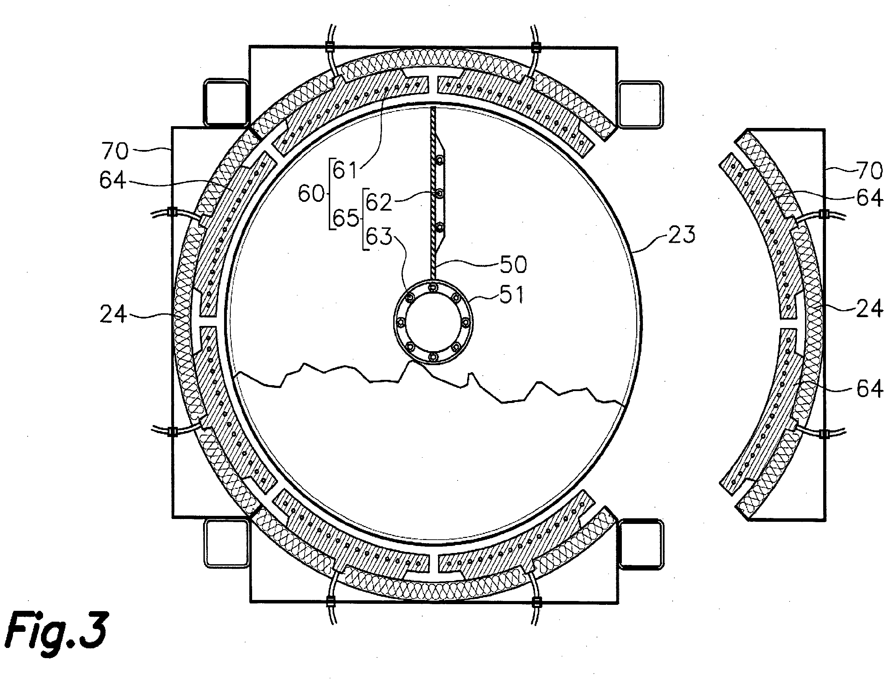

The heating means 60 proposed for the treatment of biomass inside the thermochemical reaction chamber 20 shown in Figures 2 and 3 consist of a plurality of external electrical heating means 61, consisting in the present embodiment of infrared radiators integrated inside ceramic plates 64, each of them being independently powered and/or controlled with respect to the rest of the heating means 60, said external heating means 61 being arranged around said cylindrical wall 23 located between said thermochemical reaction chamber 20 and said thermal insulation 24.

Infrared radiators were selected due to their optimal efficiency in converting electricity into heat and transmitting said heat into the thermochemical reaction chamber 20. Furthermore, integration of said infrared radiators into the ceramic plate 64 allows said infrared radiators to be pulse-activated but the heat to be transmitted homogeneously and constantly. Additionally, the ceramic can have a refractory effect with respect to the heat energy coming from the thermochemical reaction chamber 20, returning it back into the chamber and minimizing energy losses, acting like a refractory furnace. Finally, the thermal insulation 24 wraps around the assembly, further reducing heat losses.

This construction therefore has high energy efficiency and reduced operating costs.

The cylindrical wall 23 of the thermochemical reaction chamber 20 is therefore radially and/or axially surrounded by a plurality of ceramic plates 64, each integrating infrared radiators.

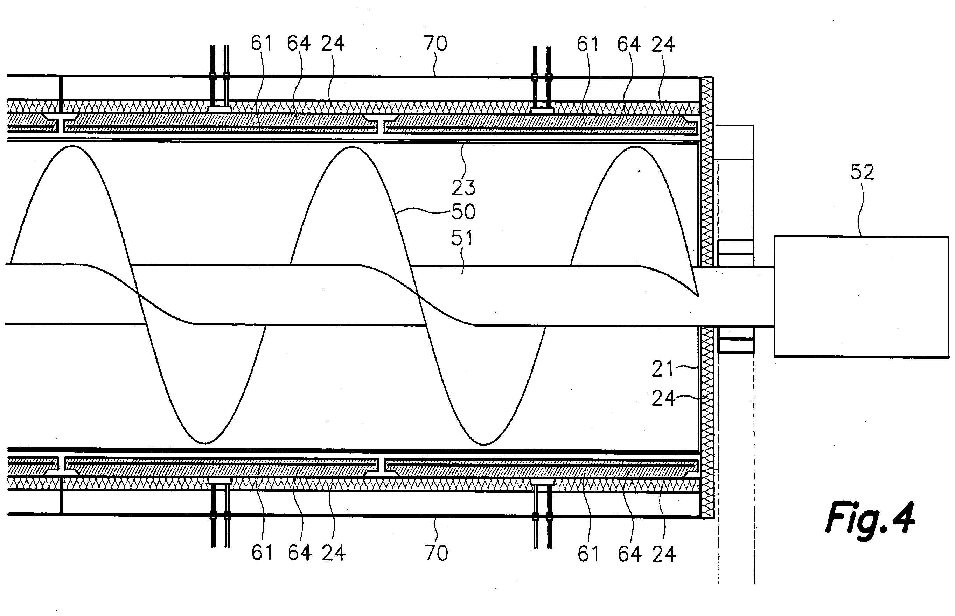

Adjacent ceramic plates 64 are held in twos, for example, in a frame 70 also integrating a portion of the thermal insulation 24 as shown in Figure 3 and 4. Said frame 70 can be easily removed from the plant assembly without having to remove any other frame 70 or any other heating means 60, which allows repairing or replacing individual ceramic plates 64 in a fast and economical manner.

In the present embodiment, the cylindrical wall 23 is radially surrounded by twelve ceramic plates 64 and axially surrounded by six ceramic plates 64, the ceramic plates being attached in twos on independent frames 70.

The inside of drive shaft 51 of the screw conveyor 50 integrates shaft heating means 63 which will preferably consist of a plurality of individual longitudinal electrical resistances that are arranged radially.

The combination of external infrared radiators with electrical resistances arranged inside the drive shaft 51 will uniformly heat the biomass, and the ceramic plates 64 together with the thermal insulation 24 will contain the heat, acting like a furnace and improving energy efficiency of the assembly.

In the present embodiment, the biomass inlet 25 of the thermochemical reaction chamber 20 has an inlet valve 40 and the fraction outlet 26 has a fraction outlet valve 41 for the exit of solid, liquid and/or gas fractions, both valves 40, 41 preventing outside air from freely entering the thermochemical reaction chamber 20. The high temperatures reached inside the thermochemical reaction chamber 20, combined with the dry combustible material arranged therein, causes the oxygen present inside said chamber 20 to be used up and the chamber to be in anoxic or almost anoxic conditions, allowing torrefaction, pyrolysis and/or gasification of the biomass arranged inside the thermochemical reaction chamber 20.

The inlet valve 40 and outlet valve 41 will preferably be rotary valves which can optionally be configured for rotating in the direction opposite the direction envisaged by the manufacturer to reduce the entrance of air.

Said inlet valve 40 and outlet valve 41 which respectively allow introducing and extracting material at an established speed, regulating the speed of treatment of the biomass together with the rotational speed of the screw conveyor 50 established by the actuating means 52 of the drive shaft 50.

Similarly, the actuating speeds of the screw conveyor 50 of the drying chamber 10 and of the cooling chamber 30 determine the speed of supplying and extracting biomass or its fractions to/from the thermochemical reaction chamber 20, and ultimately the plant operating speed. A programmable logic controller allows regulating plant operating speed by controlling the actuating speed of said screw conveyors 50 of the three chambers 10, 20, 30, and of the inlet valve 40 and outlet valve 41. The working temperature of each of the chambers 10, 20, 30 and of each of the heating means 60 can also be regulated individually. An array of sensors provides information to said programmable logic controller to allow the adjustment thereof depending on the actual plant operating conditions, thereby improving plant operation and efficiency.

In the present embodiment, the plant is sized for treating between 100 kg/h and 3000 kg/h by means of a thermochemical reaction chamber 20 between 200 and 500 cm in length and a between 20 and 50 cm in diameter.

The embodiment shown in Figure 1 shows how fractions of the biomass treated in the thermochemical reaction chamber 20 are extracted and filtered by means of two cyclone filters 80 connected in series, which allow separating the solid fraction from the gas fraction.

A cyclone filter 80 causes a spiraling air flow centrifuging heavier materials, separating them from said airflow. To prevent the liquid fraction contained in the hot gases extracted from the thermochemical reaction chamber 20 from condensing inside the cyclone filters 80, said filters can also be insulated or heated, thereby preventing the gases from cooling down inside said filters.

The filtered gas fraction is then introduced in a condenser 81 where it is fractioned, separating the liquid fraction from the gas fraction.

The solid fraction of the treated biomass is transferred both directly from the thermochemical reaction chamber 20 and from the filtered material outlet of the cyclone filters 80 to the cooling chamber 30, where cooling means 90 are responsible for reducing its temperature to a temperature allowing safe handling.

In this embodiment, the cooling means 90 consist of conduits provided in the drive shaft 51 of the screw conveyor 50, through which a cooled fluid from a chiller integrated in the plant is circulated. This chiller can supply the cooled fluid to the condenser 81 to make condensation of the liquid fraction easier, separating it from the gas fraction.

## Claims

1. An industrial plant for the thermochemical treatment of biomass which operates under anoxic or almost anoxic conditions and provided for working continuously, including:
• a cylindrical thermochemical reaction chamber (20) demarcated by a cylindrical wall (23) and by a first closed end (21) and a second closed end (22), defining an inner diameter and an axial length of the chamber;
• thermal insulation (24) arranged around said thermochemical reaction chamber (20), surrounding it;
• a biomass inlet (25) provided in a position adjacent to the first end (21) of the thermochemical reaction chamber (20) and associated with an inlet valve (40) provided for feeding biomass into said thermochemical reaction chamber (20) at a controlled speed, preventing air from freely entering said thermochemical reaction chamber (20);
• at least one fraction outlet (26) for the exit of gas, liquid and/or solid fractions, product of the treatment of biomass in the mentioned thermochemical reaction chamber (20), provided in a position adjacent to the second end (22) of the thermochemical reaction chamber (20) and associated with at least one outlet valve (41) provided for extracting said fractions, preventing air from freely entering said thermochemical reaction chamber (20);
• a screw conveyor (50) with an outer diameter fitting the inner diameter of the thermochemical reaction chamber (20) and a length fitting the axial length of said chamber (20), said screw conveyor (50) being arranged concentric with said cylindrical thermochemical reaction chamber (20) and attached to a drive shaft (51);
• actuating means (52) connected to said drive shaft (51) for causing it to rotate about an axis at a controlled speed;
• a plurality of heating means (60) provided for controllably heating said thermochemical reaction chamber (20) to temperatures up to 1200°C, sufficient to cause torrefaction, pyrolysis and/or gasification of a biomass introduced in said thermochemical reaction chamber (20);
• said plurality of heating means (60) include a plurality of external electrical heating means (61) arranged around said cylindrical wall, located between said thermochemical reaction chamber (20) and said thermal insulation (23), in successive axial positions with respect to the mentioned cylindrical wall (23);
• each external heating means (61) is associated with an independent ceramic plate (64),
which is part of a plurality of ceramic plates;
**characterized in that**
• said plurality of external heating means (61) are also arranged in different angular positions with respect to the mentioned cylindrical wall (23), forming an array of ceramic plates extending around and along the mentioned chamber;
• the external electrical heating means (61) include sensors providing information to a programmable logic controller, which is configured for regulating the temperature and/or actuating time of each external electrical heating mean (61) based on the data supplied by the sensors, being each external electrical heating means (61) electronically controlled independently with respect to the rest of the heating means (60).

2. The plant according to claim 1, **characterized in that** the mentioned plurality of heating means (60) further includes a plurality of internal heating means (65), comprising:
• a plurality of electrically powered shaft heating means (63), said shaft heating means (63) being arranged along said axis of rotation and inscribed inside the drive shaft (51) of the screw conveyor (50) at least in the two ends thereof; and/or
• a plurality of screw heating means (62), said screw heating means (62) being integrated on the spiral surface of the screw conveyor (50).

3. The plant according to claim 1 or 2, **characterized in that** said external heating means (61) are infrared radiators and/or said internal heating means (65) are electrical resistances.

4. The plant according to claim 3, **characterized in that** said infrared radiators are integrated inside said ceramic plates (64) and electrically powered by means of conductors encased in insulating material having a thermal resistance greater than that emitted by said infrared radiator.

5. The plant according to any one of the preceding claims, **characterized in that** it further includes:
• a cylindrical drying chamber (10) equipped with other heating means for controllably heating said drying chamber (10) to temperatures up to 200°C, and provided with a gas phase outlet (19) for extracting moisture from inside the drying chamber, said drying chamber (10) being provided for drying wet biomass by means of working continuously and for continuously feeding dry biomass into said thermochemical reaction chamber (20) through its biomass inlet (25); and/or
• a cylindrical cooling chamber (30) equipped with cooling means for controllably cooling in said cooling chamber the mentioned solid fraction continuously supplied from said at least one treated biomass outlet (26) of the thermochemical reaction chamber (20) to temperatures less than 40°C;
both chambers (10 and 30) being equipped with a screw conveyor (50) fitting the respective inner dimensions thereof.

6. The plant according to any one of the preceding claims, **characterized in that** each of said ceramic plates (64) covers a surface that is less than 10% of the outer surface of the thermochemical reaction chamber (20).

7. The plant according to any one of the preceding claims, **characterized in that** each of said plurality of external heating means (61) and/or internal heating means (65) are installed for being individually replaced, without having to remove any other individual heating means (60).

8. The plant according to any one of the preceding claims 1 to 6, **characterized in that** subassemblies of ceramic plates (64), which are part of said plurality of ceramic plates, are integrated in frames (70), each frame (70) is provided for being removed from the plant along with the subassembly of ceramic plates (64) integrated in said frame (70), without having to remove any other frame (70) of the plant.

9. The plant according to any one of the preceding claims, **characterized in that** all the ceramic plates (64) are identical.

10. The plant according to any one of the preceding claims, **characterized in that** it has a plurality of sensors which allow acquiring data selected from a set comprising:
• temperature of the external heating means (61);
• temperature of the internal heating means (65);
• temperature inside the thermochemical reaction chamber (20) at selected points thereof, comprising the cylindrical wall (23);
• power consumption of the external heating means (61);
• power consumption of the internal heating means (65);
• power consumption of the actuating means (52) of the drive shaft (51);
• actuating speed of the screw conveyor (50);
• actuating speed of the inlet valve (40);
• actuating speed of the outlet valve (41);
• oxygen content of the thermochemical reaction chamber (20).

11. The plant according to claim 10, **characterized in that** said programmable logic controller is connected to said sensors and is also configured for regulating, based on the data supplied by said sensors, a plurality of automatic actuators selected from at least the following:
• automatically operated biomass inlet valve (40);
• automatically operated fraction outlet valve (41) for the exit of gas, liquid and solid fractions;
• actuating means (52) connected to said drive shaft (51).

12. The plant according to claim 2, **characterized in that** said plurality of internal heating means (65) only receive power supply from one of the ends of the drive shaft (51).

13. The plant according to any one of the preceding claims, **characterized in that** the first end (21) or the second end (22) of the thermochemical reaction chamber (20) has a practicable gate with a size sufficient for allowing complete extraction of the screw conveyor (50) from inside the thermochemical reaction chamber (20).

14. The plant according to any one of the preceding claims, **characterized in that** the screw conveyor (50) has additional stirring blades arranged against the spiral surface of the conveyor, stirring and shifting around the biomass conveyed by means of said screw conveyor (50).

15. The plant according to any one of the preceding claims, **characterized in that** the ceramic plates (64) are arranged laterally contiguous to one another in the axial direction and/or in the radial direction of the thermochemical reaction chamber (20).

## Patentansprüche

1. Industrieanlage zur thermochemischen Biomassebehandlung, welche unter anoxischen oder fast anoxischen Bedingungen arbeitet und für den Dauerbetrieb vorgesehen ist, beinhaltend:
• eine zylindrische thermochemische Reaktionskammer (20), welche von einer zylindrischen Wand (23) und von einem ersten geschlossenen Ende (21) und von einem zweiten geschlossenen Ende (22) abgegrenzt ist, unter Definierung eines Innendurchmessers und einer axialen Länge der Kammer;
• eine Wärmeisolierung (24), welche um die genannte thermochemische Reaktionskammer (20) herum angeordnet ist, so dass sie sie umgibt;
• einen Biomasseeinlass (25), welcher in einer Stellung dem ersten Ende (21) der thermochemischen Reaktionskammer (20) benachbart vorgesehen ist und mit einem Einlassventil (40) assoziiert ist, welches zum Einspeisen der Biomasse in die genannte thermochemische Reaktionskammer (20) mit einer kontrollierten Geschwindigkeit vorgesehen ist, so dass verhindert wird, dass Luft frei in die genannte thermochemische Reaktionskammer (20) eintritt;
• mindestens einen Fraktionenauslass (26) für den Ausgang von gasförmigen, flüssigen und/oder festen Fraktionen, welche von der Biomassebehandlung in der erwähnten thermochemischen Reaktionskammer (20) stammen, welcher in einer Stellung dem zweiten Ende (22) der thermochemischen Reaktionskammer (20) benachbart vorgesehen ist und mit mindestens einem Auslassventil (41) assoziiert ist, welches dazu vorgesehen ist, die genannten Fraktionen auszubringen, so dass verhindert wird, dass Luft frei in die genannte thermochemische Reaktionskammer (20) eintritt;
• einen Schneckenförderer (50) mit einem Außendurchmesser, welcher mit dem Innendurchmesser der thermochemischen Reaktionskammer (20) zusammenpasst, und einer Länge, welche mit der axialen Länge der genannten Kammer (20) zusammenpasst, wobei der genannte Schneckenförderer (50) derart angeordnet ist, dass er mit der genannten zylindrischen thermochemischen Reaktionskammer (20) konzentrisch ist und mit einer Antriebswelle (51) gekoppelt ist;
• Betätigungsmittel (52), welche mit der genannten Antriebswelle (51) verbunden sind, um sie um eine Achse herum mit einer kontrollierten Geschwindigkeit zu drehen;
• eine Vielzahl von Heizmitteln (60), welche dazu vorgesehen sind, die genannte thermochemische Reaktionskammer (20) bis Temperaturen von bis zu 1200ºC kontrolliert zu heizen, die ausreichend sind, um Torrefizierung, Pyrolyse und/oder Vergasung einer in die genannte thermochemische Reaktionskammer (20) eingeführte Biomasse hervorzurufen;
• die genannte Vielzahl von Heizmitteln (60) beinhalten eine Vielzahl von äußeren elektrischen Heizmittel (61), welche um die genannte zylindrische Wand herum angeordnet sind, welche sich zwischen der genannten thermochemischen Reaktionskammer (20) und der genannten Wärmeisolierung (23) befindet, in aufeinanderfolgenden axialen Stellungen in Bezug auf die erwähnte zylindrische Wand (23);
• jedes äußere Heizmittel (61) ist mit einer unabhängigen Keramikplatte (64) assoziiert, welche Teil einer Vielzahl von Keramikplatten ist;
**dadurch gekennzeichnet, dass**
• die genannte Vielzahl von äußeren Heizmitteln (61) auch in unterschiedlichen Winkelstellungen in Bezug auf die erwähnte zylindrische Wand (23) angeordnet sind, unter Bildung einer Matrix von Keramikplatten, welche sich um die erwähnte Kammer herum und entlang derselben erstrecken;
• die äußeren elektrischen Heizmittel (61) Sensoren beinhalten, welche einer programmierbaren Logik-Kontrolleinheit Information bereitstellen, welche dazu ausgebildet ist, die Temperatur und/oder Betätigungszeit jedes äußeren elektrischen Heizmittels (61) basierend auf den von den Sensoren zugeführten Daten zu regulieren, wobei jedes äußere elektrische Heizmittel (61) unabhängig in Bezug auf den Rest der Heizmittel (60) elektronisch kontrolliert wird.

2. Anlage nach Anspruch 1, **dadurch gekennzeichnet, dass** die erwähnte Vielzahl von Heizmitteln (60) zusätzlich eine Vielzahl von inneren Heizmitteln (65) beinhalten, umfassend:
• eine Vielzahl von elektrisch angetriebenen Wellenheizmitteln (63), wobei die genannten Wellenheizmittel (63) entlang der genannten Drehachse angeordnet sind und innerhalb der Antriebswelle (51) des Schneckenförderers (50) mindestens in den zwei Enden derselben einbeschrieben sind; und/oder
• eine Vielzahl von Schneckenheizmitteln (62), wobei die genannten Schneckenheizmittel (62) auf der spiralförmigen Oberfläche des Schneckenförderers (50) integriert sind.

3. Anlage nach Anspruch 1 oder 2, **dadurch gekennzeichnet, dass** die genannten äußeren Heizmittel (61) Infrarotstrahler sind und/oder die genannten inneren Heizmittel (65) elektrische Widerstände sind.

4. Anlage nach Anspruch 3, **dadurch gekennzeichnet, dass** die genannten Infrarotstrahler innerhalb der genannten Keramikplatten (64) integriert sind und mittels Leiter elektrisch angetrieben werden, welche in einem Isoliermaterial eingeschlossen sind, welches eine größere Wärmebeständigkeit als diejenige die vom genannten Infrarotstrahler ausgestrahlt wird, aufweist.

5. Anlage nach einem der vorhergehenden Ansprüche, **dadurch gekennzeichnet, dass** sie zusätzlich Folgendes beinhaltet:
• eine zylindrische Trocknungskammer (10), welche mit anderen Heizmitteln zum kontrollierten Erhitzen der genannten Trocknungskammer (10) bis Temperaturen von bis zu 200ºC ausgerüstet ist, und mit einem Gasphasenauslass (19) zum Ausbringen der Feuchtigkeit aus dem Inneren der Trocknungskammer versehen ist, wobei die genannte Trocknungskammer (10) dazu vorgesehen ist, die nasse Biomasse mittels des Dauerbetriebs zu trocknen und die trockene Biomasse in die genannte thermochemische Reaktionskammer (20) durch deren Biomasseeinlass (25) kontinuierlich zu speisen; und/oder
• eine zylindrische Kühlkammer (30), welche mit Kühlmitteln ausgerüstet ist, zum kontrollierten Kühlen in der genannten Kühlkammer der erwähnten festen Fraktion, welche vom genannten mindestens einem Auslass für behandelte Biomasse (26) der thermochemischen Reaktionskammer (20) kontinuierlich zugeführt wird, bis Temperaturen von unter 40ºC;
wobei beide Kammern (10 und 30) mit einem Schneckenförderer (50) ausgerüstet sind, welcher mit den jeweiligen Innenabmessungen derselben zusammenpasst.

6. Anlage nach einem der vorhergehenden Ansprüche, **dadurch gekennzeichnet, dass** jede der genannten Keramikplatten (64) eine Oberfläche deckt, welche kleiner als 10% der äußeren Oberfläche der thermochemischen Reaktionskammer (20) ist.

7. Anlage nach einem der vorhergehenden Ansprüche, **dadurch gekennzeichnet, dass** jedes der genannten Vielzahl von äußeren Heizmitteln (61) und/oder inneren Heizmitteln (65) derart installiert sind, dass sie einzeln ersetzt werden können, ohne einen anderen einzelnen Heizmittel (60) abnehmen zu müssen.

8. Anlage nach einem der vorhergehenden Ansprüche 1 bis 6, **dadurch gekennzeichnet, dass** Unterbaugruppen von Keramikplatten (64), welche Teil der genannten Vielzahl von Keramikplatten sind, in Rahmen (70) integriert sind, wobei jeder Rahmen (70) dazu vorgesehen ist, aus der Anlage zusammen mit der Unterbaugruppe von Keramikplatten (64), welche im genannten Rahmen (70) integriert sind, abgenommen zu werden, ohne einen anderen Rahmen (70) der Anlage abnehmen zu müssen.

9. Anlage nach einem der vorhergehenden Ansprüche, **dadurch gekennzeichnet, dass** alle Keramikplatten (64) identisch sind.

10. Anlage nach einem der vorhergehenden Ansprüche, **dadurch gekennzeichnet, dass** sie eine Vielzahl von Sensoren aufweist, welche es erlauben Daten zu gewinnen, ausgewählt aus einem Satz umfassend:
• die Temperatur der äußeren Heizmittel (61);
• die Temperatur der inneren Heizmittel (65);
• die Temperatur innerhalb der thermochemischen Reaktionskammer (20) in ausgewählten Stellen derselben, umfassend die zylindrische Wand (23);
• den Stromverbrauch der äußeren Heizmittel (61);
• den Stromverbrauch der inneren Heizmittel (65);
• den Stromverbrauch der Betätigungsmittel (52) der Antriebswelle (51);
• die Betätigungsgeschwindigkeit des Schneckenförderers (50);
• die Betätigungsgeschwindigkeit des Einlassventils (40);
• die Betätigungsgeschwindigkeit des Auslassventils (41);
• den Sauerstoffgehalt der thermochemischen Reaktionskammer (20).

11. Anlage nach Anspruch 10, **dadurch gekennzeichnet, dass** die genannte programmierbare Logik-Kontrolleinheit mit den genannten Sensoren verbunden ist und auch dazu ausgebildet ist, basierend auf den von den genannten Sensoren zugeführten Daten, eine Vielzahl von automatischen Aktuatoren zu regulieren, mindestens aus den Folgenden ausgewählt:
• ein automatisch betriebenes Biomasseeinlassventil (40);
• ein automatisch betriebenes Fraktionenauslassventil (41) für den Ausgang von gasförmigen, flüssigen und festen Fraktionen;
• Betätigungsmittel (52), welche mit der genannten Antriebswelle (51) verbunden sind.

12. Anlage nach Anspruch 2, **dadurch gekennzeichnet, dass** die genannte Vielzahl von inneren Heizmitteln (65) nur Stromversorgung aus einem der Enden der Antriebswelle (51) bekommen.

13. Anlage nach einem der vorhergehenden Ansprüche, **dadurch gekennzeichnet, dass** das erste Ende (21) oder das zweite Ende (22) der thermochemischen Reaktionskammer (20) ein betreibbares Tor mit einer genügenden Größe aufweist, um die vollständige Abnahme des Schneckenförderers (50) aus dem Inneren der thermochemischen Reaktionskammer (20) zu erlauben.

14. Anlage nach einem der vorhergehenden Ansprüche, **dadurch gekennzeichnet, dass** der Schneckenförderer (50) zusätzliche Rührblätter aufweist, welche gegen die spiralförmige Oberfläche des Förderers angeordnet sind, so dass sie die mittels des genannten Schneckenförderers (50) geförderten Biomasse rühren und hin- und herbewegen

15. Anlage nach einem der vorhergehenden Ansprüche, **dadurch gekennzeichnet, dass** die Keramikplatten (64) seitlich nebeneinander in der axialen Richtung und/oder in der radialen Richtung der thermochemischen Reaktionskammer (20) angeordnet sind.

## Revendications

1. Une installation industrielle pour le traitement thermochimique de biomasse qui fonctionne sous des conditions anoxiques ou presque anoxiques et prévue pour le travail sans interruptions, comprenant :
• une chambre de réaction thermochimique cylindrique (20) délimitée par une paroi cylindrique (23) et par une première extrémité fermée (21) et une deuxième extrémité fermée (22), définissant un diamètre intérieur et une longueur axiale de la chambre ;
• un isolement thermique (24) aménagé autour de cette chambre de réaction thermochimique (20) en l'entourant ;
• une entrée de biomasse (25) prévue dans une position adjacente à la première extrémité (21) de la chambre de réaction thermochimique (20) et reliée à une soupape d'admission (40) prévue pour alimenter la biomasse dans cette chambre de réaction thermochimique (20) à une vitesse contrôlée, en empêchant l'air d'entrer librement dans cette chambre de réaction thermochimique (20) ;
• au moins une sortie de fraction (26) pour la sortie de fractions de gaz, liquide et/ou solide, produit par le traitement de biomasse dans cette chambre de réaction thermochimique (20), prévue dans une position adjacente à la deuxième extrémité (22) de la chambre de réaction thermochimique (20) et reliée à au moins une soupape de sortie (41) prévue pour extraire ces fractions, en empêchant l'air d'entrer librement dans cette chambre de réaction thermochimique (20) ;
• un transporteur à vis (50) ayant un diamètre extérieur adapté au diamètre intérieur de la chambre de réaction thermochimique (20) et une longueur adaptée à la longueur axiale de cette chambre (20), ce transporteur à vis (50) étant aménagé concentrique à cette chambre de réaction thermochimique cylindrique (20) et relié à un arbre d'entraînement (51) ;
• des moyens d'actionnement (52) reliés à cet arbre d'entraînement (51) pour le faire tourner sur un axe à une vitesse contrôlée ;
• une pluralité de moyens de chauffage (60) prévus pour chauffer de façon contrôlée cette chambre de réaction thermochimique (20) à des températures de jusqu'à 1.200°C, suffisante pour causer la torréfaction, la pyrolyse et/ou la gazéification d'une biomasse introduite dans cette chambre de réaction thermochimique (20) ;
• cette pluralité de moyens de chauffage (60) comprend une pluralité de moyens de chauffage électrique externes (61) aménagés autour de cette paroi cylindrique, située entre cette chambre de réaction thermochimique (20) et cet isolement thermique (23), dans des positions axiales successives par rapport à cette paroi cylindrique (23) ;
• chacun des moyens de chauffage extérieurs (61) est relié à une plaque en céramique indépendante (64), qui fait partie d'une pluralité de plaques en céramique ;
**caractérisée en ce que**
• cette pluralité de moyens de chauffage extérieurs (61) sont également aménagés dans différentes positions angulaires par rapport à cette paroi cylindrique (23) en formant une série de plaques en céramique s'étendant autour et le long de cette chambre ;
• les moyens de chauffage électrique extérieurs (61) comprennent des capteurs fournissant des informations à un contrôleur logique programmable, qui est configuré pour réguler la température et/ou le temps actionné de chaque moyen de chauffage électrique extérieur (61) basé sur les données fournies par les capteurs, chacun des moyens de chauffage électrique extérieur (61) étant électroniquement contrôlé indépendament par rapport au reste des moyens de chauffage (60).

2. L'installation conformément à la revendication 1, **caractérisée en ce que** cette pluralité de moyens de chauffage (60) comprend en plus une pluralité de moyens de chauffage intérieurs (65), comportant :
• une pluralité de moyens de chauffage (63) de l'arbre fonctionnant à l'électricité, ces moyens de chauffage (63) de l'arbre étant aménagés le long de cet axe de rotation et inscrits à l'intérieur de l'arbre d'entraînement (51) du transporteur à vis (50) au moins à ses deux extrémités ; et/ou
• une pluralité de moyens de chauffage à vis (62), ces moyens de chauffage à vis (62) étant intégrés sur la surface spirale du transporteur à vis (50).

3. L'installation conformément à la revendication 1 ou 2, **caractérisée en ce que** ces moyens de chauffage extérieurs (61) sont des radiateurs à infrarouge et/ou ces moyens de chauffage intérieurs (65) sont des résistances électriques.

4. L'installation conformément à la revendication 3, **caractérisée en ce que** ces radiateurs à infrarouge sont intégrés à l'intérieur de ces plaques en céramique (64) et fonctionnent à l'électricité au moyen de conducteurs emboîtés dans un matériau isolant ayant une résistance thermique supérieure à celle émise par ce radiateur à infrarouge.

5. L'installation conformément à une quelconque des revendications précédentes, **caractérisée en ce qu'**elle comprend en plus :
• une chambre de séchage cylindrique (10) équipée d'autres moyens de chauffage pour chauffer de façon contrôlée cette chambre de séchage (10) à des températures de jusqu'à 200°C, et pourvue d'une sortie de phase gazeuse (19) pour extraire l'humidité de l'intérieur de la chambre de séchage, cette chambre de séchage (10) étant prévue pour sécher la biomasse humide au moyen du travail sans interruption et de l'alimentation sans interruption de biomasse sèche dans cette chambre de réaction thermochimique (20) à travers son entrée de biomasse (25) ; et/ou
• une chambre de refroidissement cylindrique (30) équipée de moyens de refroidissement pour le refroidissement contrôlé dans cette chambre de refroidissement de cette fraction solide alimentée sans interruption de cette au moins une sortie (26) de biomasse traitée de la chambre de réaction thermochimique (20) à des températures inférieures à 40°C ;
les deux chambres (10 et 30) étant équipées d'un transporteur à vis (50) adapté à leurs dimensions respectives.

6. L'installation conformément à une quelconque des revendications précédentes, **caractérisée en ce que** chacune de ces plaques en céramique (64) couvre une surface qui est inférieure à 10% de la surface extérieure de la chambre de réaction thermochimique (20).

7. L'installation conformément à une quelconque des revendications précédentes, **caractérisée en ce que** chacun de cette pluralité de moyens de chauffage extérieurs (61) et/ou de moyens de chauffage intérieurs (65) sont installés de sorte à être remplacés individuellement, sans avoir à retirer tout autre moyen de chauffage individuel (60).

8. L'installation conformément à une quelconque des revendications précédentes 1 à 6, **caractérisée en ce que** des sous-ensembles de plaques en céramique (64), qui font partie de cette pluralité de plaques en céramique, sont intégrés dans des châssis (70), chaque châssis (70) est prévu pour être retiré de l'installation en même temps que le sous-ensemble de plaques en céramique (64) intégrées dans ce châssis (70) sans avoir à retirer tout autre châssis (70) de l'installation.

9. L'installation conformément à une quelconque des revendications précédentes, **caractérisée en ce que** toutes les plaques en céramique (64) sont identiques.

10. L'installation conformément à une quelconque des revendications précédentes, **caractérisée en ce qu'**elle a une pluralité de capteurs qui permettent d'acquérir des données sélectionnées d'un ensemble comprenant :
• la température des moyens de chauffage extérieurs (61) ;
• la température des moyens de chauffage intérieurs (65) ;
• la température à l'intérieur de la chambre de réaction thermochimique (20) à des points sélectionnés de celle-ci, comprenant la paroi cylindrique (23) ;
• la consommation d'électricité des moyens de chauffage extérieurs (61) ;
• la consommation d'électricité des moyens de chauffage intérieurs (65) ;
• la consommation des moyens d'actionnement (52) de l'arbre d'entrainement (51) ;
• la vitesse d'actionnement du transporteur à vis (50) ;
• la vitesse d'actionnement de la soupape d'admission (40) ;
• vitesse d'actionnement de la soupape de sortie (41) ;
• la teneur en oxygène de la chambre de réaction thermochimique (20) ;

11. L'installation conformément à la revendication 10, **caractérisée en ce que** ce contrôleur logique programmable est connecté à ces capteurs et il est également configuré pour réguler, basé sur les données fournies par ces capteurs, une pluralité d'actionneurs automatiques sélectionnés d'au moins les suivants :
• soupape d'admission de biomasse (40) fonctionnant automatiquement ;
• soupape de sortie de fraction (41) fonctionnant automatiquement pour la sortie des fractions de gaz, de liquide et de solide ;
• moyens d'actionnement (52) connectés à cet arbre d'entraînement (51).

12. L'installation conformément à la revendication 2, **caractérisée en ce que** cette pluralité de moyens de chauffage intérieurs (65) ne reçoit l'alimentation électrique que d'une des extrémités de l'arbre d'entraînement (51).

13. L'installation conformément à une quelconque des revendications précédentes, **caractérisée en ce que** la première extrémité (21) ou la deuxième extrémité (22) de la chambre de réaction thermochimique (20) possède une vanne utilisable ayant une dimension suffisante pour permettre l'extraction totale du transporteur à vis (50) de l'intérieur de la chambre de réaction thermochimique (20).

14. L'installation conformément à une quelconque des revendications précédentes, **caractérisée en ce que** le transporteur à vis (50) possède des pales d'agitateur complémentaires aménagées contre la surface en spirale du transporteur, qui agitent et déplacent la biomasse transportée au moyen de ce transporteur à vis (50).

15. L'installation conformément à une quelconque des revendications précédentes, **caractérisée en ce que** les plaques en céramique (64) sont aménagées contigües latéralement entre elles dans le sens axial et/ou radial de la chambre de réaction thermochimique (20).
